Europäisches Patentamt

European Patent Office

Office européen des brevets

(11) Veröffentlichungsnummer: **0 161 553**
**A2**

# (12) EUROPÄISCHE PATENTANMELDUNG

(21) Anmeldenummer: **85105016.1**

(22) Anmeldetag: **25.04.85**

(51) Int. Cl.⁴: **G 01 N 29/04**

(30) Priorität: **14.05.84 DE 3417864**

(43) Veröffentlichungstag der Anmeldung: **21.11.85**
**Patentblatt 85/47**

(84) Benannte Vertragsstaaten: **CH FR GB LI NL**

(71) Anmelder: **ERNST LEITZ WETZLAR GMBH,**
**Ernst-Leitz-Strasse 30 Postfach 20 20,**
**D-6330 Wetzlar 1 (DE)**

(72) Erfinder: **Dransfeld, Klaus, Prof. Dr., Immenstall,**
**CH-8272 Ermatingen (CH)**
Erfinder: **Heitmann, Knut, Dipl.-Ing., Lerchenweg 16,**
**D-6330 Wetzlar 1 (DE)**

(54) **Verfahren und Vorrichtung zum lokalselektiven Nachweis und der Erzeugung von polaren Strukturausrichtungen in mikroskopischen Objektbereichen.**

(57) Polare Strukturen in mikroskopischen Objektbereichen, wie z.B. elektrische oder magnetische Dipole, können lokalselektiv mit hoher Auflösung nachgewiesen werden, wenn in dem Objektbereich entweder durch ein lokal wirkendes Hochfrequenzfeld resonante Ultraschallwellen induziert und mit einer fokussierten akustischen Linsenanordnung detektiert werden oder durch fokussierte Ultraschallwellen elektrische oder magnetische Hochfrequenzschwingungen induziert und durch einen entsprechenden Empfänger detektiert werden. Die Phasen und/oder Amplituden der induzierenden und der detektierten Wellen geben durch Vergleich Auskunft über das Vorhandensein und die Richtung der Dipole.

Durch ein kritisches elektrisches oder magnetisches Gleichfeld können vorhandene Dipolausrichtungen energetisch instabil gemacht und durch das fokussierte Ultraschallstrahlenbündel lokalselektiv umgekehrt werden. Anwendungen sind z.B. in der Materialuntersuchung und der Datenspeichertechnik gegeben.

ACTORUM AG

Verfahren und Vorrichtung zum lokalselektiven Nachweis und der Erzeugung
von polaren Strukturausrichtungen in
mikroskopischen Objektbereichen
==========================================

Die Erfindung betrifft Verfahren und Anordnungen zur
Durchführung der Verfahren zum lokalselektiven Nachweis von polaren Strukturen in mikroskopischen Objektbereichen und zum lokalselektiven Erzeugen von
polaren Strukturen definierter, stabiler Ausrichtung
in mikroskopischen Bereichen geeigneter Objekte.

Es ist bekannt, daß sowohl biologische als auch
kristalline und amorphe Objekte Strukturen aufweisen
können, die für piezoelektrische oder magnetostriktive Reaktionen der Objekte verantwortlich sind.
Grundlage dieser Effekte ist das Vorhandensein polarer Strukturen, wie insbesondere elektrischer oder
magnetischer Dipole. Im biologischen Bereich zeigt
die Zellmembranstruktur z.B. ein piezoelektrisches
Verhalten. Bestimmte Kunststoffolien können aufgrund ihrer geordneten Polymerstruktur zu piezoelektrischen Schwingungen angeregt werden. Magnetostriktive Eigenschaften werden überwiegend in Ultraschall erzeugenden Systemen (Schallgeber) ausgenutzt. Die rein magnetische Ausrichtung ist Grundlage vieler Datenspeichersysteme. In der wissenschaftlichen Forschung und insbesondere in der Technik der Datenspeicherung besteht ein Bedürfnis, das Vorhandensein und die Verteilung der elektrischen und magnetischen Dipole in immer kleineren Objektbereichen aufspüren und möglichst auch noch beeinflussen zu können. Angestrebt wird ein Auflösungsvermögen, das dem lichtmikroskopischer Untersuchungsmethoden vergleichbar oder überlegen ist. Der Erfindung lag die Aufgabe zugrunde, hierfür geeignete Verfahren und Anordnungen anzugeben.

Diese Aufgabe wird erfindungsgemäß durch die im kennzeichnenden Teil der Ansprüche 1, 2, 6 und 7 angegebenen Merkmale gelöst. Vorteilhafte Ausgestaltungen einzelner Merkmale und Weiterbildungen des Erfindungsgegenstandes ergeben sich aus den Unteransprüchen 3 bis 5 und 8 bis 14.

Die Erfindung geht von der Erkenntnis aus, daß durch ein äußeres Hochfrequenzfeld die Dipole in piezoelektrischen oder magnetostriktiven Strukturen zu Schwingungen oder Präzessionsbewegungen angeregt werden, die ihrerseits Ultraschallwellen mit der Anregungsfrequenz erzeugen. Diese Ultraschallwellen können mit Hilfe einer aus der akustischen Mikroskopie bekannten akustischen Linsenanordnung detektiert und in elektrische Signale umgewandelt werden. Die akustische Linsenanordnung definiert aufgrund ihrer Konstruktionsparameter, wie z.B. Linsenmaterial und Krümmung der Linsenfläche, einen Fokusbereich, der bei entsprechend hohen Ultraschallfrequenzen durchaus kleiner als bei optischen Objektiven sein kann. Da nur die Ultraschallwellen von der akustischen Linsenanordnung aufgenommen werden, die in dem Fokusbereich ihren Ursprung haben, bestimmt allein die akustische Linsenanordnung die Größe des untersuchten Objektbereichs. Die an sich ebenfalls bekannten Anordnungen zur Erzeugung lokal begrenzter Hochfrequenzfelder können also durchaus eine größere Ausdehnung haben als dieser Objektbereich.

Dieselben Überlegungen gelten auch, wenn mit Hilfe eines fokussierten Ultraschallfeldes die Dipole zu Schwingungen oder Präzessionen angeregt werden und dabei Hochfrequenzschwingungen derselben Frequenz erzeugen. Auch hier definiert die Ausdehnung des Ultraschallfokus die Größe des untersuchten Objektbereichs. Der Empfänger für die Hochfrequenzschwingungen braucht lediglich auf diesen Objektbereich gerichtet zu sein, um die hiervon ausgehenden Schwingungen aufnehmen zu können.

Der weitere Vorteil des erfindungsgemäßen Verfahrens besteht darin, daß in jedem Fall ein physikalischer Unterschied zwischen dem anregenden Strahlungsfeld und dem detektierten Strahlungsfeld besteht, so daß beide Strahlungsfelder nicht miteinander interferieren, was die Signaltrennung wesentlich erleichtert. Sowohl das anregende Hochfrequenzfeld als auch ein anregendes Ultraschallwellenfeld können in einfacher Weise in der Frequenz und der Intensität geregelt werden, wodurch eine optimale Anpassung an die Objekteigenschaften möglich ist. Eine weitere Anpassungsmöglichkeit ergibt sich durch die zusätzliche Anwendung eines magnetischen Gleichfeldes im untersuchten Objektbereich, mit dessen Hilfe eine resonante Anregung der magnetischen Dipole erreicht werden kann.

Da die Ultraschallerzeugung bzw. die Ultraschallwandlung nach der Detektion mit Hilfe von piezoelektrischen Wandlern geschieht, stehen sowohl im Signal anregenden als auch im Signal nachweisenden Verfahrensschritt elektrische Signale zur Verfügung, deren gegenseitige Phasenlage und Amplitude bestimmt werden können. Aus einer Phasenverschiebung läßt sich dabei die Polarisationsrichtung der Dipole bestimmen, während die Intensität des Nachweissignals Rückschlüsse über die Anzahl und Stärke der Dipole erlaubt.

Der Erfindungsgegenstand wird nachfolgend anhand der Zeichnung näher erläutert. Die Figuren zeigen in schematischer Darstellung Ausführungsbeispiele für repräsentative Anwendungsfälle, und zwar im einzelnen:

Fig. 1    eine Anordnung zum Nachweis elektrischer Dipole mit Ultraschalldetektion,

Fig. 2    eine Anordnung zum Nachweis magnetischer Dipole mit HF-Detektion.

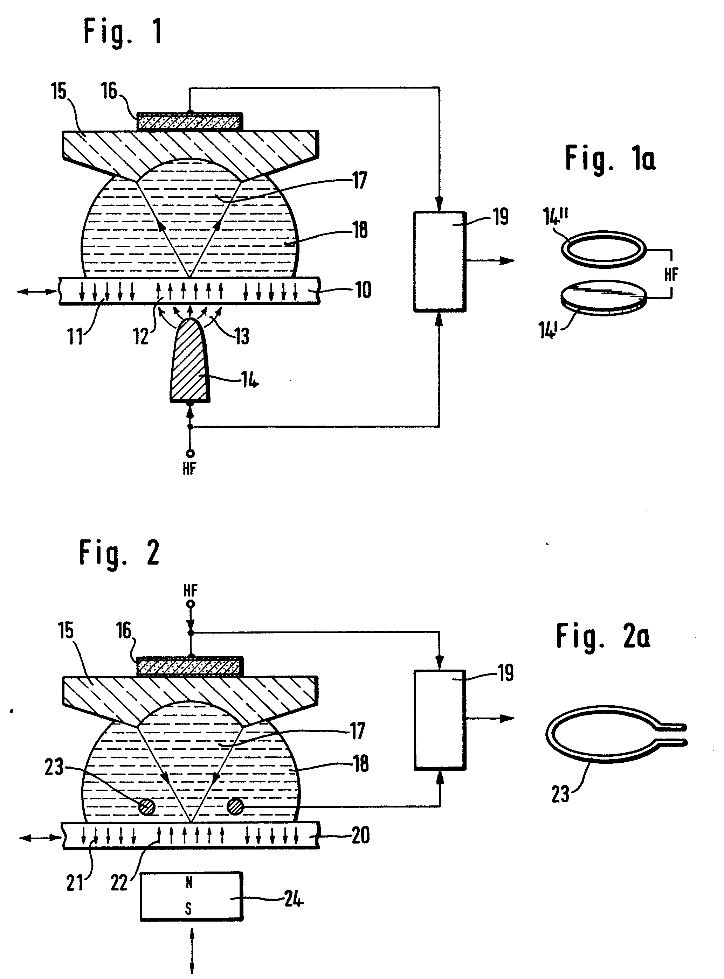

In Fig. 1 soll eine piezoelektrische Folie 10 aus
Polyvinylidenfluorid (PVDF) untersucht werden. Eine
bandförmige Folie aus diesem Material kann z.B. als
Tonband verwendet werden, auf dem die Informationen
in digitaler Form gespeichert sind. Die einzelnen
Bit-Zonen 11,12 zeichnen sich durch unterschiedliche
Polarisationsrichtungen der elektrischen Dipole aus,
die in Fig. 1 durch die Pfeilrichtungen dargestellt
sind.

Zum Nachweis der Dipolgruppen wird das PVDF-Band durch
ein hochfrequentes elektrisches Feld 13 hindurchgeführt, das von der Spitze einer nadelförmigen Sendeelektrode 14 ausgeht. Die Schwingfrequenz $\omega$ liegt z.B.
im GHz-Bereich. Dabei kann dann z.B. ein Auflösungsvermögen von etwa 1 $\mu$m erreicht werden. Die Dipole
folgen der anregenden Schwingung mit einer von ihrer
Polarisationsrichtung abhängigen Phasenverschiebung
und erzeugen ihrerseits im gleichen Takt Ultraschallschwingungen.

Der Sendeelektrode gegenüberliegend ist eine akustische Linsenanordnung vorgesehen. Diese enthält ein
Ultraschallobjektiv 15, bestehend aus einem Saphirstab mit eingeschliffener Linsenfläche, und einem piezoelektrischen Wandler 16, der üblicherweise aus einer zwischen zwei Goldschichten als Elektroden eingeschlossenen Zinkoxidschicht (ZnO) besteht. Das Ultraschallobjektiv 15 ist auf das PVDF-Band fokussiert und sammelt nur die in den dargestellten Schallstrahlenkegel 17 eintretenden Ultraschallstrahlen. Als Kopplungsmedium für den Übergang der Ultraschallstrahlen vom PVDF-Band 10 zum Ultraschallobjektiv 15 dient ein Wassertropfen 18. Es ist erkennbar, daß auch bei sehr spitzer Sendeelektrode 14 das Hochfrequenzfeld 13 einen wesentlich größeren Bereich bestrahlt als das Ultraschallobjektiv 15 jeweils selektiv erfaßt. Damit werden einerseits Detailuntersuchungen innerhalb der Dipolgruppen 11,12 und ihrer Grenzbereiche möglich und zum anderen könnte auch eine wesentlich dichtere Bitfolge gewählt werden, die noch von der akustischen Linsenanordnung aufgelöst werden kann.

Sollten die Eindringtiefen des HF-Feldes und des Ultraschallfokus in das Objekt aufgrund der Objektstruktur nicht für die in Fig. 1 dargestellte Transmissionsanordnung ausreichen, so ist es auch möglich, die Sendeelektrode 14 auf derselben Seite anzuordnen wie das Ultraschallobjektiv 15. Die Spitze der HF-Elektrode ist dabei auf den Fokusbereich des Ultraschallobjektivs zu richten. Zur Erzeugung eines lokal begrenzten Hochfrequenzfeldes ist auch eine Anordnung geeignet, die aus einer Platte 14' und einer gegenüberliegenden ringförmigen Elektrode 14'' besteht. Der Ring kann auf derselben Seite liegen wie die akustische Linsenanordnung, wobei der Ultraschallfokus in der Ringinnenfläche liegt (Fig. 2a).

Die anregenden Hochfrequenzschwingungen und die am piezoelektrischen Wandler 16 entstehenden elektrischen Signale werden in einer Phasen und/oder Amplitudenmeß- und Vergleichsschaltung 19 für die weitere Signalauswertung verarbeitet. Bei einer Verschiebung des PVDF-Bandes 10 relativ zur Meßanordnung wird die Phase des Meßsignals zunächst konstant bleiben, solange die Dipolgruppe 12 durch den Fokusbereich des Ultraschallobjektivs läuft. Die Amplitude des Meßsignals kann sich in Abhängigkeit von der Dichte der Dipole ändern, sie wird jedoch zu Null im Bereich zwischen den Dipolgruppen. Sobald z.B. die Dipolgruppe 11 vom Ultraschallobjektiv erfaßt wird, tritt ein Phasensprung im Meßsignal ein.

Die Meßaufgabe bei dem Ausführungsbeispiel nach Fig. 2 besteht darin, eine in einem Magnetband 20 vorliegende senkrechte Magnetisierung und die Richtung der magnetischen Dipole 21,22 festzustellen. Die Ultraschallstrahlen können auch in diesem Fall durch ein lokal wirkendes, hochfrequentes Magnetfeld induziert werden, das durch eine hochfrequent stromdurchflossene Leiterschleife 23 erzeugt wird. Die Wechselfrequenz $\omega$ liegt z.B. wiederum im GHz-Bereich. Aufgrund der Präzession der magnetischen Dipole werden dann Ultraschallwellen erzeugt, die durch die bereits beschriebene akustische Linsenanordnung nachgewiesen werden können. Die Präzession der magnetischen Dipole kann durch ein überlagertes magnetisches Gleichfeld verstärkt werden.

In Fig. 2 ist jedoch der Fall dargestellt, daß die akustische Linsenanordnung 15,16 mit Hilfe des fokussierten Ultraschallstrahlenbündels 17 die Dipole zu einer Präzessionsbewegung anregt und auf diese Weise ein gleichfrequentes magnetisches Wechselfeld erzeugt wird, das mit Hilfe der Stromschleife 23 detektiert wird. Die Anregung der Dipole ist hier auf einen wesentlich kleineren Bereich beschränkt als er zum Nachweis des induzierten Magnetfeldes ausgenutzt wird. Im übrigen gelten dieselben Überlegungen wie bei der Anordnung nach Fig. 1. Die Anordnung läßt sich in vorteilhafter Weise durch die Anordnung eines zusätzlichen magnetischen Gleichfeldes 24 ergänzen. In diesem Feld können die Dipole im Magnetband 20 in Resonanz erregt werden, wenn die Ultraschallfrequenz entsprechend gewählt wird. Die Resonanzfrequenz der Dipole 22 (Spin up) ist deutlich anders als die der Dipole 21 (Spin down), so daß durch Vergleich der Amplituden ein weiteres Kriterium für den Nachweis der Dipolrichtungen gegeben ist.

Bei geeigneter Wahl der Felstärke des Permanentmagneten 24 (z.B. Samarium-Magnet) besteht außerdem die Möglichkeit, die beschriebene Anordnung auch zum Erzeugen bestimmter magnetischer Dipolausrichtungen zu verwenden. Für die magneto-optische Informationsspeicherung sind Materialien bekannt, die normal zur Oberfläche magnetisierbar sind und bei denen diese Vormagnetisierungsrichtung durch optische Strahlung lokal umgekehrt werden kann. Als Beispiel werden dünne Filme einer amorphen ferromagnetischen Legierung aus Gadoliniumeisen (GdFe) genannt. Wird in der Anordnung nach Fig. 2 als Magnetband 20 ein solcher Film verwendet, dann können durch das Gleichfeld des Magneten 24 die vormagnetisierten Dipole energetisch soweit angehoben werden, daß die magnetische Kompensationstemperatur der Legierung (Curiepunkt) nahezu erreicht wird. Mit Hilfe eines pulsmodulierten Ultraschallstrahlenbündels kann die Energie der Dipole dann über den Curiepunkt angehoben werden, so daß sich die Polarisationsrichtung im Modulationstakt umkehrt. Bei bewegtem Aufzeichnungsträger lassen sich auf diese Weise mindestens ebenso große Speicherdichten erreichen wie bei der optischen Aufzeichnung. Bei Ultraschallfrequenzen von mehreren GHz ließe sich wegen der geringeren Fokusausdehnung sogar eine Erhöhung der Speicherdichte erreichen. Wesentlich ist jedoch, daß sich mit derselben Anordnung nach Ausschaltung des magnetischen Gleichfeldes die eingeschriebene Information mit derselben Auflösung auch wieder auslesen läßt.

**A n s p r ü c h e**

1. Verfahren zum lokalselektiven Nachweis von polaren
Strukturen in mikroskopischen Objektbereichen,
d a d u r c h   g e k e n n z e i c h n e t ,   daß
auf den Objektbereich mit Hilfe eines lokal wirkenden Senders (14) ein Hochfrequenzfeld der Frequenz
$\omega$ gerichtet wird, das in dem Objektbereich resonante Ultraschallwellen derselben Frequenz $\omega$ oder einer
Harmonischen von $\omega$ induziert, daß
diese Ultraschallwellen mit Hilfe einer auf den
mikroskopischen Objektbereich fokussierten akustischen Linsenanordnung (15,16) detektiert und in
elektrische Signale umgewandelt werden und daß
die Phasen und/oder Amplituden des anregenden Hochfrequenzfeldes und der induzierten Ultraschallwellen miteinander verglichen werden (19).

2. Verfahren zum lokalselektiven Nachweis von polaren
Strukturen in mikroskopischen Objektbereichen,
d a d u r c h   g e k e n n z e i c h n e t ,   daß
auf den mikroskopischen Objektbereich mit Hilfe einer akustischen Linsenanordnung (15,16) ein fokussiertes Ultraschallstrahlenbündel der Frequenz ω gerichtet wird, das in dem beschallten Objektbereich elektrische oder magnetische Hochfrequenzschwingungen derselben Frequenz ω oder einer Harmonischen von ω induziert, daß diese Hochfrequenzschwingungen mit Hilfe eines lokal wirkenden Empfängers (23) detektiert und die Phasen und/oder Amplituden der anregenden Ultraschallwellen und des induzierten Hochfrequenzfeldes miteinander verglichen werden (19).

3. Verfahren nach einem der Ansprüche 1 oder 2, d a d u r c h   g e k e n n z e i c h n e t ,   daß zum Nachweis elektrischer polarer Strukturen ein elektrisches Hochfrequenzfeld verwendet wird.

4. Verfahren nach einem der Ansprüche 1 oder 2, d a d u r c h   g e k e n n z e i c h n e t ,   daß zum Nachweis magnetischer polarer Strukturen ein magnetisches Hochfrequenzfeld verwendet wird.

5. Verfahren nach Anspruch 4, d a d u r c h   g e - k e n n z e i c h n e t ,   daß dem magnetischen Hochfrequenzfeld ein magnetisches Gleichfeld zur Anregung magnetischer Resonanz überlagert wird.

6. Verfahren zum lokalselektiven Erzeugen von polaren Strukturen definierter, stabiler Ausrichtung in mikroskopischen Bereichen geeigneter Objekte,

**d a d u r c h   g e k e n n z e i c h n e t ,** daß der Objektbereich einem kritischen elektrischen oder magnetischen Gleichfeld (24) ausgesetzt wird, durch das die polare Ausrichtung instabil wird und mit Hilfe eines auf den mikroskopischen Bereich fokussierten Ultraschallstrahlenbündels (17) die instabilen polaren Strukturen in die gewünschte neue stabile Ausrichtung gebracht werden.

7. Anordnung zum Nachweis von in einem mikroskopischen Objektbereich enthaltenen polaren Strukturen, **g e k e n n z e i c h n e t** durch ein auf den mikroskopischen Objektbereich fokussiertes akustisches Linsensystem (15,16) zur Erzeugung und/oder Detektion akustischer Wellen der Frequenz ω oder Harmonischer davon, ein auf dieselbe Objektstelle gerichtetes Sende/Empfangssystem (14;23) für ein Hochfrequenzfeld derselben Frequenz und einem System (19) zum Vergleich der Phasen und/oder Amplituden der akustischen Wellen und der Hochfrequenzschwingungen.

8. Anordnung nach Anspruch 7, **d a d u r c h   g e k e n n z e i c h n e t ,** daß das akustische Linsensystem (15,16) und das Sende-/Empfangssystem (14) einander auf verschiedenen Seiten des Objektbereiches gegenüber liegen.

9. Anordnung nach Anspruch 7, d a d u r c h g e -
k e n n z e i c h n e t , daß das akustische Linsensystem (15,16) und das Sende-/Empfangssystem
(23) auf derselben Seite des Objektes angeordnet
sind.

10. Anordnung nach einem der Ansprüche 7 bis 9,
d a d u r c h g e k e n n z e i c h n e t , daß
das Sende-/Empfangssystem (14) für ein elektrisches
Hochfrequenzfeld ausgelegt ist.

11. Anordnung nach einem der Ansprüche 7 bis 9,
d a d u r c h g e k e n n z e i c h n e t , daß
das Sende-/Empfangssystem (23) für ein magnetisches Hochfrequenzfeld ausgelegt ist.

12. Anordnung nach einem der Ansprüche 10 oder 11,
d a d u r c h g e k e n n z e i c h n e t , daß
zum Erzeugen von polaren Strukturen bestimmter Ausrichtungen zusätzlich ein auf den untersuchten Objektbereich gerichtetes, ein elektrisches bzw.
magnetisches Gleichfeld einstellbarer, kritischer
Stärke erzeugendes System (24) vorgesehen ist.

13. Anordnung nach Anspruch 11, d a d u r c h
g e k e n n z e i c h n e t , daß zusätzlich ein
Permanentmagnet vorgesehen ist, dessen Feldlinien
mit denen des Hochfrequenzfeldes gleichgerichtet
sind.

14. Anordnung nach einem der Ansprüche 12 oder 13, dadurch gekennzeichnet, daß das zusätzliche System (24) schaltbar ist.

## Fig. 1

15 16 17 18 10 11 12 13 14 19 HF

## Fig. 1a

14" 14' HF

## Fig. 2

HF 15 16 17 18 23 19 20 21 22 23 24 N S

## Fig. 2a

23